# EUROPEAN PATENT APPLICATION

(11) **EP 1 892 816 A1**
(43) Date of publication of application: **27.02.2008**
(21) Application number: 07000826.3
(22) Date of filing: 16.01.2007
(51) Int. Cl.: H02K 7/09, F04D 19/04

(54) **Magnetic floating shaft set and apparatus using same**

(30) Priority: 24.08.2006 CN 200620132001 U; 24.11.2006 CN 200610145378
(71) Applicant: Yu, Chien-Chun, Sinjhuang City T'ai pei County 242 (TW)
(72) Inventor: Yu, Chien-Chun, Sinjhuang City T'ai pei County 242 (TW)
(74) Representative: Becker Kurig Straus

(57) **Abstract**

A magnetic floating shaft set (50) is disclosed to include two guides (22 · 32) kept apart from each other at a distance in such a manner that one guide (22) is movable relative to the other guide (32) to adjust the distance between the two guides (22 · 32), a shaft (42) set in between the two guides (22 · 32) with the two distal ends thereof respectively facing the two guides (22 · 32), a magnetic member (44) mounted on the shaft (42), and a winding (24) coaxially mounted around the shaft (42) for generating a magnetic field to induce the magnetic member (44) and to further cause floating of the shaft (42) between the two guides (22 · 32) and rotation of the magnetic member (44) on the shaft (42).

## Description

### BACKGROUND OF THE INVENTION

### 1. Field of the Invention

The present invention relates to magnetic floating shafts and more particularly to a magnetic floating shaft set for high speed rotation.

### 2. Description of the Related Art

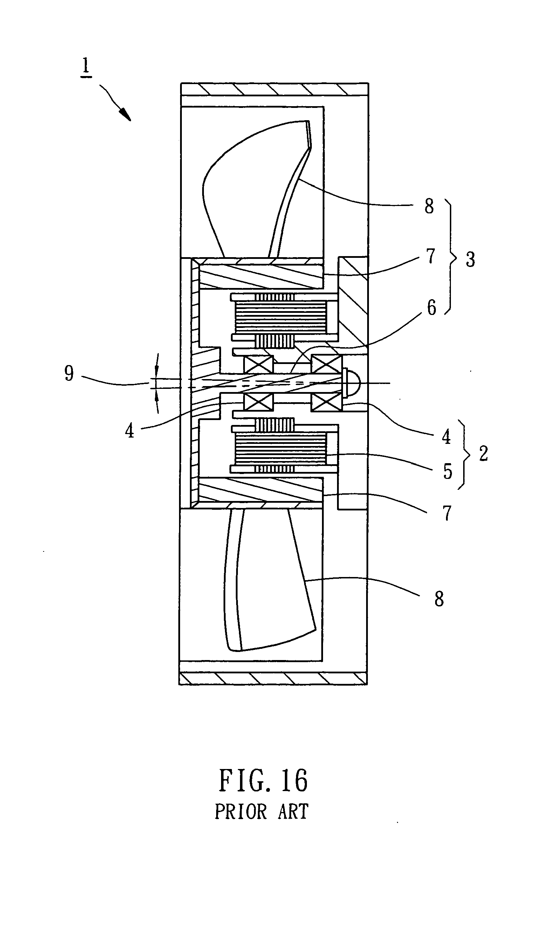

Cooling fan is intensively used in different fields to cause currents of air for cooling or dissipation of heat. FIG 16 shows a conventional cooling fan **1.** As illustrated, the cooling fan **1** comprises a stator **2** and a rotor **3.** The stator **2** comprises an axle bearing **4,** a winding **5** arranged around the axle bearing **4.** The rotor **3** has a shaft **6,** a magnetic ring **7,** and a plurality of blades **8.** The shaft **6** is inserted through the axle bearing **4.** The blades **8** are radially connected to the shaft **6.** During operation of the cooling fan 1, the interaction between the magnetic ring **7** and the winding **5,** causes the shaft **6** to rotate. During rotation of the shaft **6,** the blades **8** are moved with the shaft **6** to cause currents of air.

During operation of the aforesaid cooling fan **1,** the direction of the magnetic force produced by the winding **5** and the magnet ring **7** is not in conformity with the extending direction of the shaft **6,** thereby producing a biasing angle **9.** Further, the axle bearing **4** starts to wear after a long use of the cooling fan **1,** causing the biasing angle **9** to increase. With the wearing of the axle bearing **4,** the mechanical performance of the axle bearing **4** is relatively lowered, thereby shortening the working life and performance of the cooling fan **1.** Further, because the axle bearing **4** is an open structure that cannot eliminate accumulation of dust. Accumulation of dust affects the functioning of the axle bearing **4,** thereby increasing the noise and lowering the mechanical performance.

US 6,309,190 discloses a design entitled "Shaft supporting structure for an axial fan". According to this design, the shaft supporting structure for an axial fan includes a base and a casing. Electronic control elements are provided for driving the fan wheel under by virtue of the induction of a coil. The fan wheel includes blades and a magnet ring that can be inducted for driving a central shaft thereof. The central shaft includes two ends that are respectively supported in an arcuate recess of a support member in the base and an arcuate recess of another support member in the casing.

The aforesaid shaft supporting structure uses a support member in the base and an arcuate recess of another support member in the casing to support the central shaft, instead of axle bearings used in conventional designs. However, the magnetic force induced between the coil and the magnetic ring causes the axial fan to bias sideways while driving the fan wheel. Further, rotation of the fan not only causes currents of air but also causes a reaction force against the fan. If the distance between the two support members is shorter than the length of the central shaft due to a manufacturing error, the support members can still support rotation of the central shaft with the fan wheel. However, under the action of the magnetic force and the reaction force, a heavy contact force and reaction force may be produced between one end of the central shaft and the associating support member, resulting in abnormal wearing or deformation of the central shaft. When the central shaft starts to wear or to deform, the fan cannot be rotated at a high speed, and a high noise will be produced during rotation of the fan, thereby shortening the working life of the fan.

### SUMMARY OF THE INVENTION

The present invention has been accomplished under the circumstances in view. It is one object of the present invention to provide a magnetic floating shaft set and an apparatus using the magnetic floating shaft set that is suitable for high speed operation.

It is another object of the present invention to provide a magnetic floating shaft set and an apparatus using the magnetic floating shaft set that have the characteristics of optimal mechanical efficiency, long working life, and low noise level.

To achieve these and other objects of the present invention, the magnetic floating shaft set comprises two guides kept apart from each other at a distance, one of the two guides being movable relative to the other to change the distance between the two guides; a shaft set in between the two guides, the shaft having two distal ends respectively facing the two guides; a magnetic member mounted on the shaft; and a winding coaxially mounted around the shaft and adapted to generate a magnetic field to induce the magnetic member and to further cause floating of the shaft between the two guides and rotation of the magnetic member with the shaft. With the aforesaid arrangement, the magnetic floating shaft set and the apparatus using the magnetic floating shaft set possess a simple structure. Further, the small contact area between the shaft and the guides greatly reduces the friction area, thereby improving the mechanical performance, prolonging the working life of the cooling fan and reducing noise level. Further, the invention allows adjustment of the distance between the two guides, allowing smooth rotation of the magnetic floating shaft set for high speed operation.

### BRIEF DESCRIPTION OF THE DRAWINGS

FIG 1 is an elevational assembly view of a first embodiment of the present invention.
FIG 2 is a sectional plain view in an enlarged scale of the first embodiment of the present invention.
FIG 3 is a schematic drawing of a part of the first embodiment of the present invention, showing a displacement status of the shaft.
FIG 4 is schematic drawing of a part of the first embodiment of the present invention, showing the relative action between the winding and the magnetic member.
FIG 5 is a schematic drawing of a part of the first embodiment of the present invention, showing the relation between the shaft and the guides.
FIG 6 is a schematic drawing showing the relative action between the shaft and the guides during operation of the cooling fan according to the first embodiment of the present invention.
FIG 7 is a schematic drawing of a part of the first embodiment of the present invention, showing movement of the first guide relative to the second guide.
FIG 8 is similar to FIG 2, but showing a magnetic floating bearing set between the shaft and the winding.
FIG 9 is a sectional view of a second embodiment of the present invention.
FIG 10 is a sectional view of a third embodiment of the present invention.
FIG 11 is a sectional view of a fourth embodiment of the present invention.
FIG 12 is similar to FIG 11, but showing a ball set in the end of the shaft.
FIG 13 is a sectional view of a fifth embodiment of the present invention.
FIG 14 is a sectional view of a sixth embodiment of the present invention.
FIG 15 is similar to FIG 14, but showing bearings set between the shaft and one of the guides.
FIG 16 is a schematic drawing showing the structure of a prior art cooling fan.

### DETAILED DESCRIPTION OF THE INVENTION

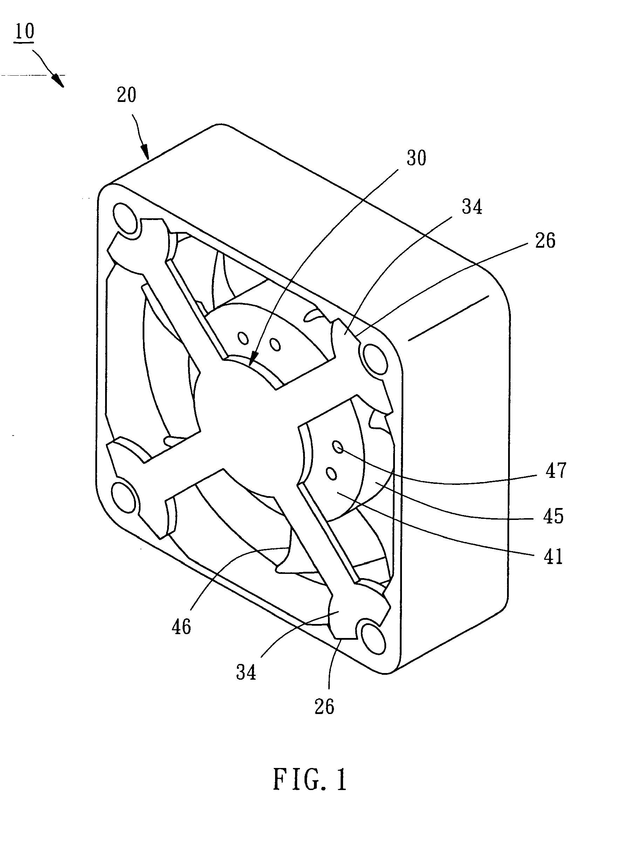

Referring to FIGS. 1~3, a magnetic floating shaft set **50** in accordance with a first embodiment of the present invention is shown used in a cooling fan **10.** The cooling fan **10** comprises a first rack **20** and a second rack **30.** The magnetic floating shaft set **50** is mounted in between the first rack **20** and the second rack **30.**

The first rack 20 has four limit portions **26** at one side. The limit portions **26** are respectively formed in the corners of the rack **20.** The second rack **30** has four locating portions **34.** The locating portions **34** are respectively engaged into the limit portions **26** to secure the second rack **30** to the first rack **20.**

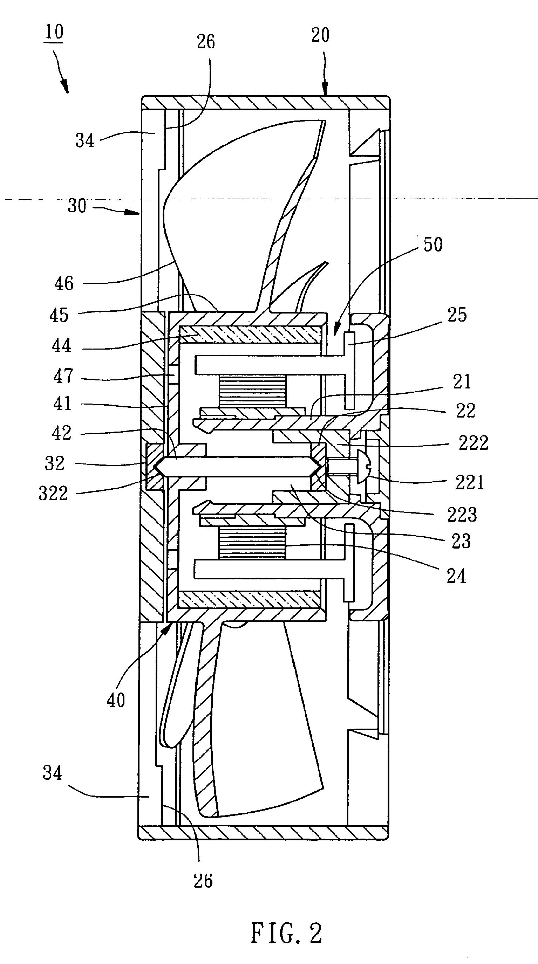

As illustrated in FIG 2, the first rack **20** has a hollow center portion **21** that accommodates a positioning member **222.** The positioning member **222** has an insertion hole **23.** The positioning member **222** is mounted with an adjustment member **221.** According to this embodiment, the adjustment member **221** is a screw. The adjustment member **221** is screwed into the positioning member **222** and threaded into the insertion hole **23.**

The magnetic floating shaft set **50** comprises a first guide **22,** a second guide **32,** a shaft **42,** an actuator **40,** a magnetic member **44,** and a winding **24.**

The first guide **22** and the second guide **32** are respectively formed of a wear resistant material, for example, diamond, graphite or ceramics, each having a groove **223** or **322.** The first guide **22** is placed in the insertion hole **23** of the positioning member **222** and joined with the adjustment member **221.** The second guide **32** is mounted in the second rack **30** corresponding to the first guide **22** so that the grooves **223** and **322** of the guides **22** and **32** are respectively disposed in the first rack **20** and the second rack **30** and facing each other. When the adjustment member **221** in the first rack **20** is rotated relative to the positioning member **222,** the first guide **22** is moved by the adjustment member **221** in the insertion hole **23** of the positioning member **222** to adjust the distance between the first guide **22** and the second guide **32.**

The shaft **42** is set between the first guide **22** and the second guide **32,** having its two ends respectively facing the grooves **223** and **322** of the guides **22** and **32.**

The actuator **40** has a circular base **41.** The circular base **41** has a plurality of through holes **47** for heat dissipation, and a sidewall 45 extending around the border thereof. The shaft **42** is perpendicularly mounted in the center of the circular base **41,** having its one end extending out of the circular base 41 and its other end extending to the inside of the sidewall **45.** Blades **46** are radially affixed to the outer side of the sidewall **45.**

The magnetic member **44** is a magnetic ring mounted around the inner side of the sidewall **45** for synchronous movement with the actuator **40** and the shaft **42.**

The winding **24** has an annular circuit board **25.** The winding **24** and the annular circular board **25** are mounted in the center portion **21** of the first rack **20** in such a manner that the winding **24** is coaxially disposed around the shaft **42** between the magnetic member **44** and the shaft **42.** The centerline of the magnetic field of the magnetic member **44** is in alignment with the centerline of the magnetic field produced by the winding **24.**

Because of the interaction between the magnetic field of the magnetic member **44** and the magnetic filed produced by the winding **24** and the centerline of the magnetic field of the magnetic member **44** is in alignment with the centerline of the magnetic field produced by the winding **24,** the actuator **40** is in a magnetic floating status and the two ends of the shaft **42** do not touch the first guide **22** and the second guide **32.** During operation of the cooling fan **10,** the winding **24** is energized to induce with the magnetic member **44** an electric potential, thereby an angular displacement of the magnetic member **44,** and therefore the actuator **40** is rotated. During rotation of the actuator **40,** the blades **46** are rotated with the actuator **40** to cause currents of air for cooling or heat dissipation.

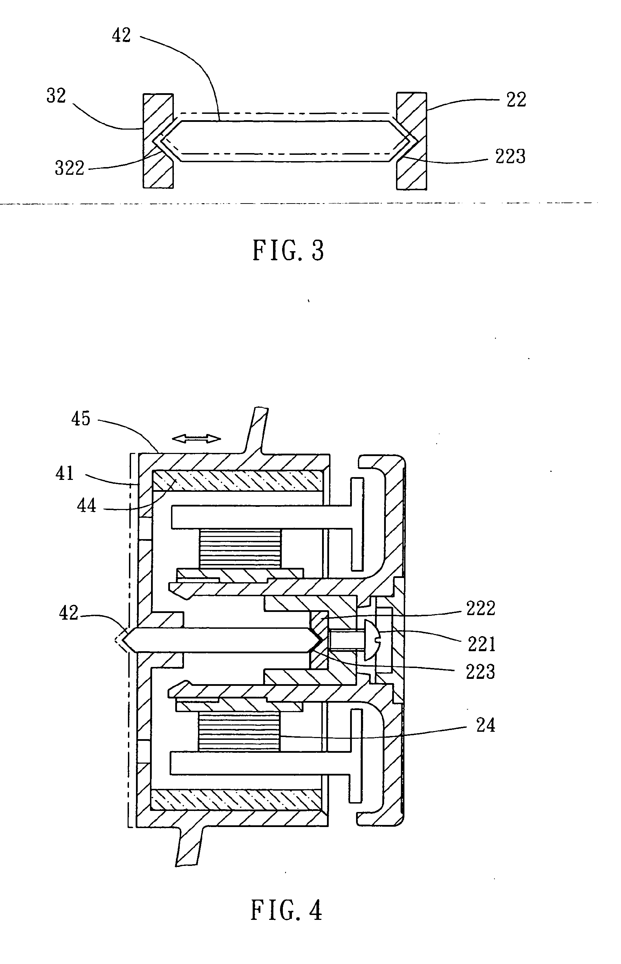

As shown in FIG 3, if the shaft **42** is biased at the start during operation due to magnetic force or other factors, the grooves **223** and **322** of the guides **22** and **32** will guide and limit the movement of the shaft **42,** keeping the motion of the shaft **42** straight, and therefore the shaft **42** is rotating steadily.

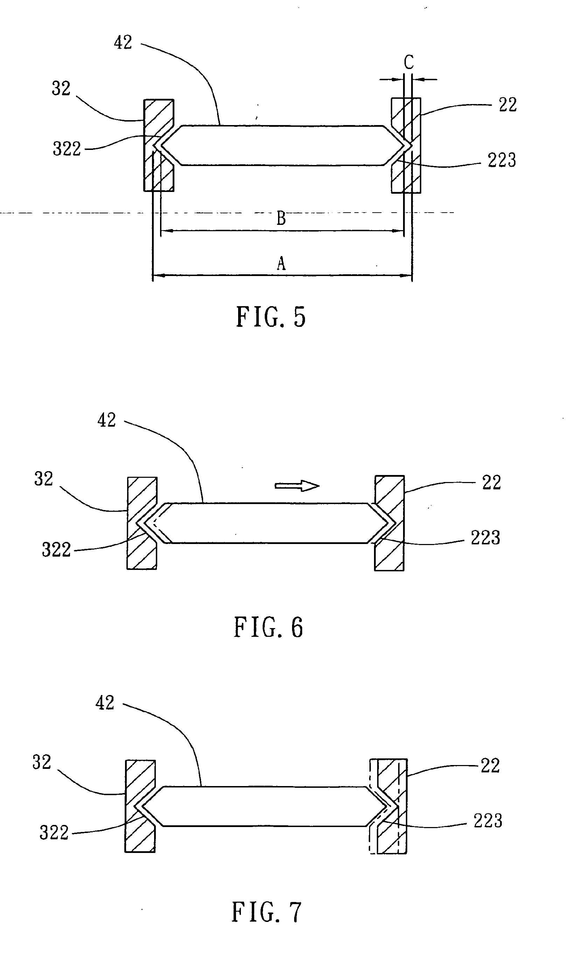

Referring to FIGS. 4~7, during rotation of the actuator **40,** the reaction force produced upon moving of the blades **46** against air forces the actuator **40** to move linearly along the axis of the shaft **42.** Let the length of the shaft **42** be denoted by **B,** the linear moving distance of the shaft **42** during its rotation by C, and the maximum distance between the grooves **223** and **322** of the guides **22** and **32** by A. Thus, **A>B+C** (see FIG 5). Thus, the shaft **42** is moving between the guides **22** and **32** during operation of the cooling fan **10** without causing unnecessary active force or reaction force. If the shaft **42** is tightly stopped against the first guide **22** or the second guide **32** or caused to wear or to deform during a test procedure in the factory, or if the gap between the shaft **42** and the guide **22** or **32** is excessively large, as shown in FIG 7, the user can operate the adjustment member **221** to move the first guide **22** to adjust the gap between the shaft **42** and the guide **22** or **32** and changing the contact area between the shaft **42** and the guides **22** and **32** to assure smooth rotation of the actuator **40** and to prevent stoppage of the shaft **42** against the guide **23** or **32,** and therefore the rotating speed of the actuator **40** of the cooling fan **10** can be accelerated.

As stated above, the magnetic floating shaft set **50** and the apparatus using same of the invention possess a simple structure. Further, the small contact area between the shaft **42** and the guides **22** and **32** greatly reduces the friction area, thereby improving the mechanical performance, prolonging the working life of the cooling fan and reducing noise level. Further, the invention allows adjustment of the distance between the two guides, allowing smooth rotation of the magnetic floating shaft set for high speed application.

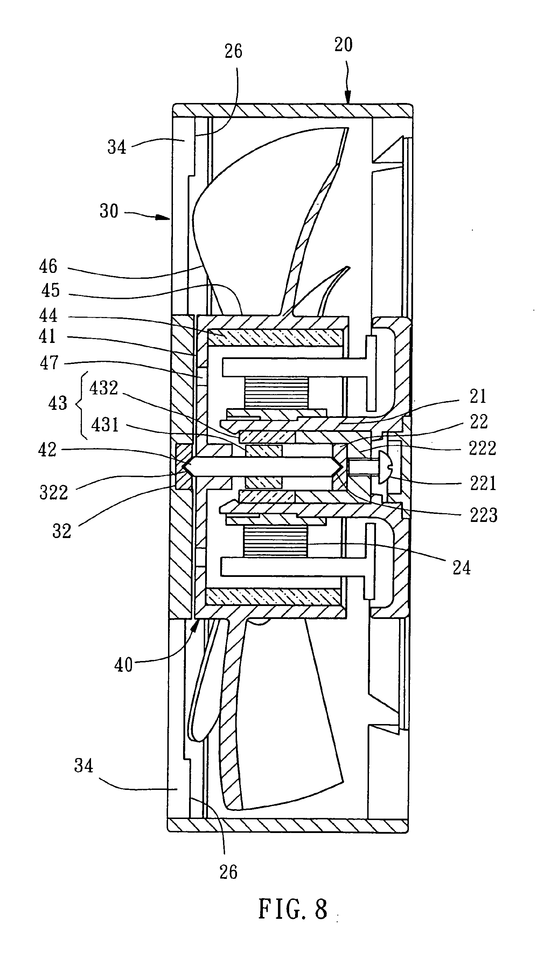

Referring to FIG 8, when the magnetic floating shaft set **50** is used in a cooling fan, a magnetic floating bearing **43** may be set between the shaft **42** and the winding **24.** The magnetic floating bearing **43** has an inner race **431** and an outer race **432.** The inner race **431** is sleeved onto the shaft **42.** The outer race **432** is set in the center portion **21** of the first rack **20** and kept spaced around the inner race **431.** The magnetic floating bearing **43** imparts a magnetic force to the shaft **42** so that the shaft **42** can only be moved axially during its rotation, preventing biasing and assuring smooth and stable rotation.

In addition to the arrangement of the guides with the associated grooves to correct biasing of the shaft, the guides can be made to have a different design to fit the shaft.

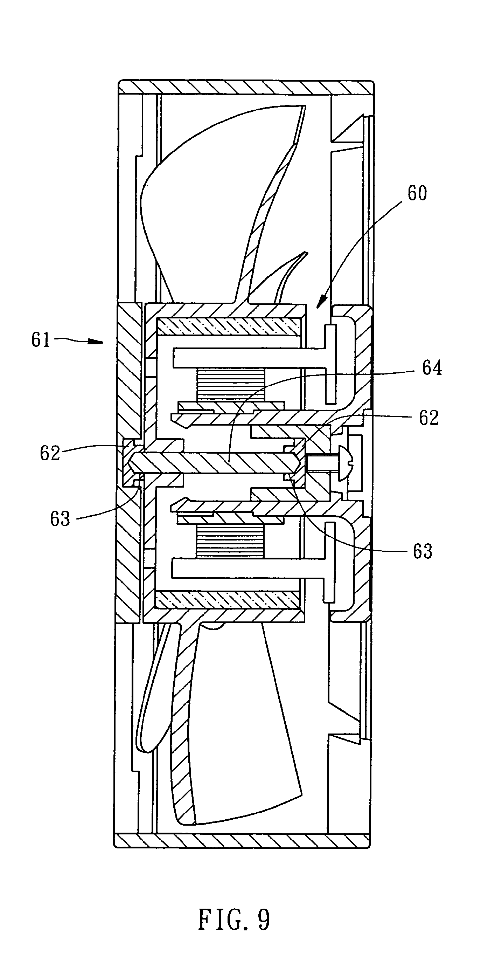

FIG 9 shows a magnetic floating shaft set **60** used in a cooling fan **61** in accordance with a second embodiment of the present invention. This second embodiment is substantially similar to the aforesaid first embodiment, with the exception that each guide **62** has an annular flange **63** protruded from the surface thereof and defining therein a space. The shaft **64** has its two ends respectively inserted into the annular flanges **63** of the guides **62,** i.e. the annular flanges **63** of the guides **62** surround the ends of the shaft **64.**

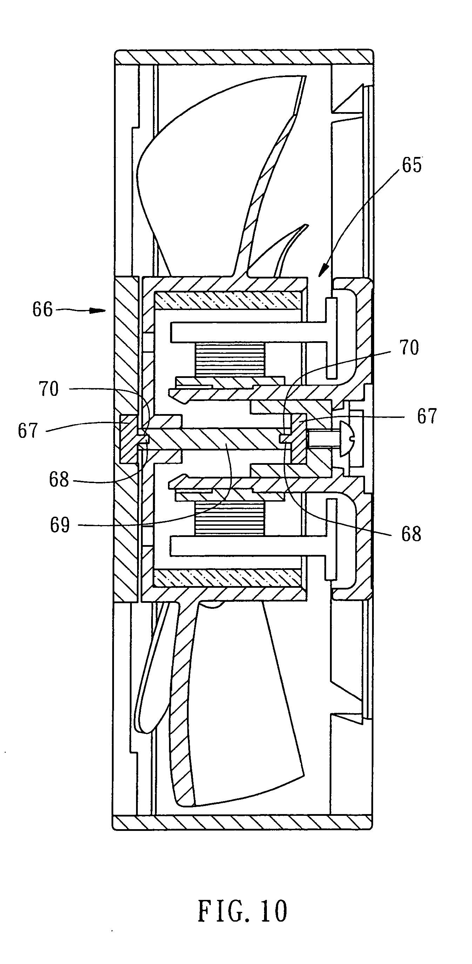

FIG 10 shows magnetic floating shaft set **65** used in a cooling fan **66** in accordance with a third embodiment of the present invention. This third embodiment is substantially similar to the aforesaid first embodiment, with the exception that each guide **67** has a projecting rod **68;** the shaft **69** has a recessed portion **70** disposed on each of the two ends thereof and respectively facing the projecting rods **68** of the two guides **67.**

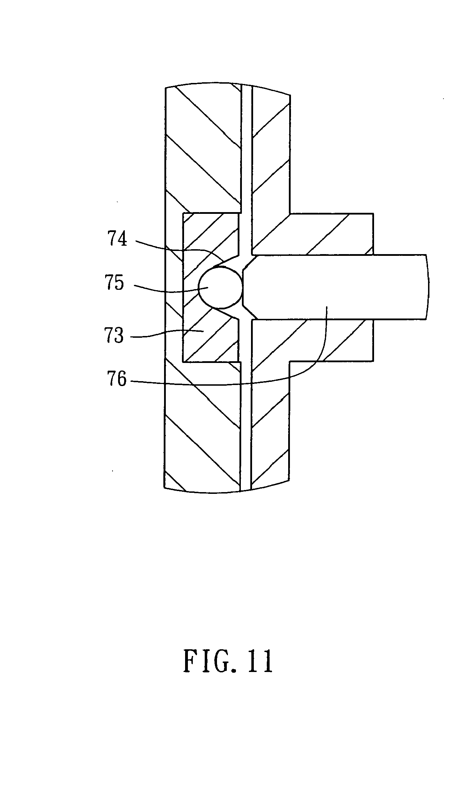

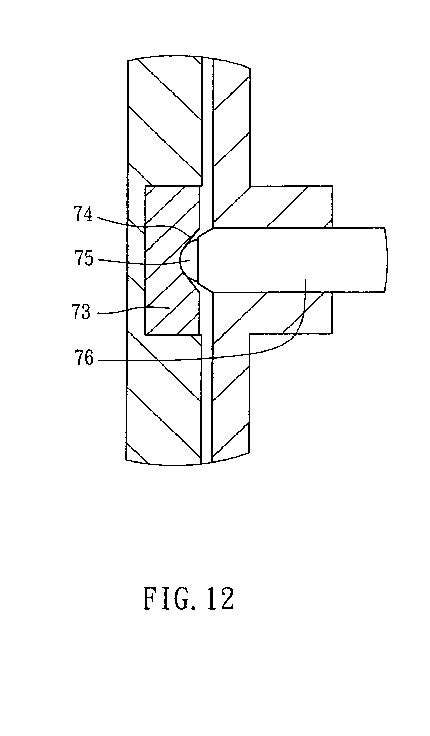

FIG 11 shows magnetic floating shaft set **71** used in a cooling fan **72** in accordance with a fourth embodiment of the present invention. This fourth embodiment is substantially similar to the aforesaid first embodiment, with the exception that each guide **73** has a groove **74** and a ball **75** rotatably received in the groove **74.** The two ends of the shaft 76 are respectively aimed at the guides **73** such that the balls **75** may touch the ends of the shaft **76** during movement of the shaft **76.** Further, FIG 12 shows the ball 75 set into one of the end of the shaft **76.** The guides **73** of this fourth embodiment can also accurately guide and correct movement of the shaft **76.**

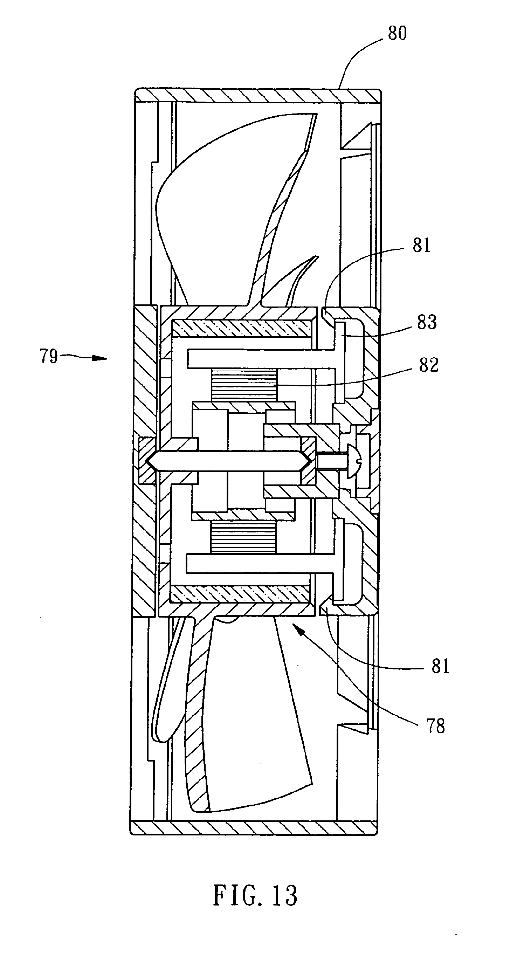

FIG 13 shows a magnetic floating shaft set **78** used in a cooling fan **79** in accordance with a fifth embodiment of the present invention. This fifth embodiment is substantially similar to the aforesaid first embodiment, with the exception that the first rack **80** has a plurality of hooks **81;** the circuit board **83** of the winding **82** of the magnetic floating shaft set **78** is fastened to the hooks **81.** This fifth embodiment facilitates quick installation of the magnetic floating shaft set **78** in the first rack **80.**

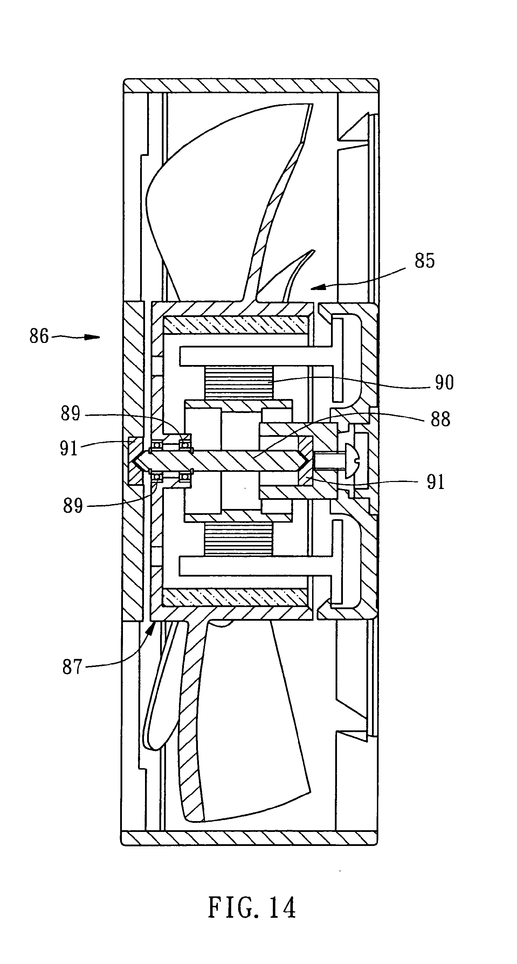

To accelerate the rotating speed of the magnetic floating shaft set and to lower its friction, a further sixth embodiment is provided. As shown in FIG 14, a magnetic floating shaft set **85** is used in a cooling fan **86** in accordance with the sixth embodiment of the present invention. This sixth embodiment is substantially similar to the aforesaid first embodiment, with the exception that the magnetic floating shaft set **85** has two bearings **89** set between the actuator **87** and the shaft **88.** When the induced magnetic force of the winding **90** drives the actuator **87** to rotate, the actuator **87** can be turned about the axis of the shaft **88,** and the bearings **89** enable the rotating speed of the shaft **88** to be lower than the rotating speed of the actuator **87,** thereby reducing possible friction and reaction force between the shaft **88** and two guides **91,** accelerating the rotating speed of the actuator **87,** and prolonging the working life of the present invention.

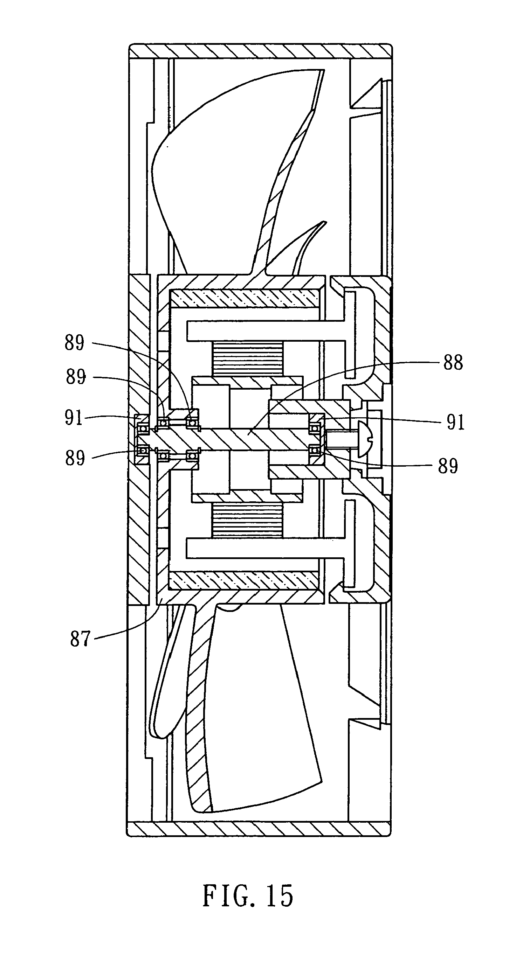

Referring to FIG 15, bearings **89** may be provided between the shaft **89** and the actuator **87** and between the shaft **89** and the guides **91,** achieving the aforesaid effect of accelerating the rotating speed.

A prototype of magnetic floating shaft set and apparatus using same has been constructed with the features of FIGS. 1∼15. The magnetic floating shaft set and apparatus using same functions smoothly to provide all of the features discussed earlier.

Although particular embodiments of the invention have been described in detail for purposes of illustration, various modifications and enhancements may be made without departing from the spirit and scope of the invention. Accordingly, the invention is not to be limited except as by the appended claims

## Claims

1. A magnetic floating shaft set (50) being **characterized in** comprising:
two guides (22 32) kept apart from each other at a distance, one of said two guides (22) being movable relative to the other of said two guides (32) to change the distance between said two guides (22, 32) ;
a shaft (42) set in between said two guides (22, 32), said shaft (42) having two distal ends respectively facing said two guides (22, 32) ;
a magnetic member (44) mounted around said shaft (42) ; and
a winding (24) coaxially mounted around said shaft (42) and adapted to generate a magnetic field to induce said magnetic member (44) and to further cause floating of said shaft (42) between said two guides (22 32) and rotation of said magnetic member (44) with said shaft (42).

2. The magnetic floating shaft set (60) as claimed in claim 1, wherein at least one of said two guides (62) has an annular flange (63) protruded from a surface thereof, said annular flange (63) defining therein a space for receiving the corresponding distal end of said shaft (64).

3. The magnetic floating shaft set (65) as claimed in claim 1, wherein at least one of said two guides (67) has a projecting rod (68) facing the corresponding distal end of said shaft (69) and said shaft (69) has a recessed portion (70) at the corresponding distal end for receiving the projecting rod (68).

4. The magnetic floating shaft set (71) as claimed in claim 1, wherein at least one of said two guides (73) has a ball (75) facing the corresponding distal end of said shaft (76).

5. The magnetic floating shaft set (50) as claimed in claim 1, wherein the distance between said two guides (22, 32) is greater than the length of said shaft (42).

6. The magnetic floating shaft set (50) as claimed in claim 1, further comprising a magnetic floating bearing (43) mounted between said shaft (42) and said winding (24).

7. The magnetic floating shaft set (50) as claimed in claim 1, wherein said shaft (42) has mounted thereon an actuator (40) that holds said magnetic member (44).

8. The magnetic floating shaft set (50) as claimed in claim 7, wherein said actuator (40) comprises a base (41) having a plurality of through holes (47), a sidewall (45) perpendicularly extending along the periphery of said base (41), and a plurality of blades (46) fastened to an outer side of said sidewall (45) in a radial manner relative to said shaft (42); wherein said shaft (42) is mounted in said base (41) to have one of the two distal ends thereof extending out of said base (41) and the other of the two distal ends thereof extending to inside of said sidewall (45), and said magnetic member (44) is mounted in an inner side of said sidewall (45).

9. The magnetic floating shaft set (85) as claimed in claim 1, further comprising at least one bearing (89) set between said magnetic member(44) and said shaft (88).

10. The magnetic floating shaft set (50) as claimed in claim 1, wherein the centerline of the magnetic field of said magnetic member (44) is in alignment with the centerline of the magnetic field of said winding (24) such that said shaft (42) is floating between said two guides (32).

11. A cooling fan (10) comprising a first rack (20) and a second rack (30), said cooling fan (10) being **characterized in** comprising a magnetic floating shaft set (50) of claim 1, which is mounted between said first rack (20) and said second rack (30), the two guides (22∼32) of said magnetic floating shaft set (50) being respectively mounted in said first rack (20) and said second rack (30).

12. The cooling fan (10) as claimed in claim 11, wherein said first rack (20) comprises a positioning member (222) and an adjustment member (221); the guide(22) of said magnetic floating shaft set (50) mounted in said first rack is placed in said positioning member (222) of said first rack (20); and said adjustment member (221) is movably mounted in said positioning member (222) and coupled to the guide (22) of said magnetic floating shaft set mounted in said first rack..

13. A magnetic floating shaft set (85) being **characterized in** comprising:
two guides (91) kept apart from each other at a distance;
a shaft (88) set in between said two guides (91), said shaft (88) having two distal ends respectively facing said two guides (91);
at least one bearing (89) mounted on said shaft (88);
an actuator (87) mounted on said at least one bearing (89);
a magnetic member (44) mounted on said actuator (87); and
a winding (90) coaxially mounted around said shaft (88) and adapted to generate a magnetic field to induce said magnetic member (44) and to further cause floating of said shaft (88) between said two guides (91) and rotation of said magnetic member (44) on said shaft (88).

14. The magnetic floating shaft set (85) as claimed in claim 13, wherein at least one of said two guides (62) has an annular flange (63) protruded from a surface thereof, said annular flange (63) defining therein a space for receiving the corresponding distal end of said shaft (64).

15. The magnetic floating shaft set (85) as claimed in claim 13, wherein at least one of said two guides (67) has a projecting rod (68) facing the corresponding distal end of said shaft (69); and said shaft (69) has a recessed portion (70) at the corresponding distal end for receiving the projecting rod (68).

16. The magnetic floating shaft set (85) as claimed in claim 13, wherein the distance between said two guides (91) is greater than the length of said shaft (88).

17. The magnetic floating shaft set (85) as claimed in claim 13, wherein said actuator (87) comprises a base (41), having a plurality of through holes (47), a sidewall (45) perpendicularly extending along the periphery of said base (41), and a plurality of blades (46) affixed to an outer side of said sidewall (45) in a radial manner relative to said shaft (88); wherein said shaft (88) is mounted in said base (41) to have one of the two distal ends thereof extending out of said base (41) and the other of the two distal ends thereof extending to inside of said sidewall (45),and said magnetic member (44) is mounted in an inner side of said sidewall (45).

18. The magnetic floating shaft set (85) as claimed in claim 13, wherein the centerline of the magnetic field of said magnetic member (44) is in alignment with the centerline of the magnetic field of said winding (90) such that said shaft (88) is floating between said two guides (91).

19. The magnetic floating shaft set (85) as claimed in claim 13, further comprising a positioning member (222) holding one of said two guides (91), and an adjustment member (221) movably mounted in said positioning member (222) and coupled to the guide (91) held by said positioning member (222).
